# EUROPEAN PATENT APPLICATION

(11) **EP 1 701 480 A1**
(43) Date of publication of application: **13.09.2006**
(21) Application number: 05700468.1
(22) Date of filing: 21.01.2005
(51) Int. Cl.: H04L 12/40

(54) **DIGITAL SUBSCRIBER LINE ACCESS MULTIPLEXER AND DATA TRANSMISSION METHOD FOR ACHIEVING THE MULTICAST BANDWIDTH EXPANSION**

(30) Priority: 15.02.2004 CN 200410005710
(71) Applicant: Huawei Technologies Co., Ltd., Longgang District, Shenzhen, Guangdong 518129 (CN)
(72) Inventor: WU, Haijun,Huawei Administration Building, Shenzhen, Guangdong 518129 (CN)
(74) Representative: Manitz, Gerhart
(86) International application number: PCT/CN2005/000094
(87) International publication number: WO 2005/081462

(57) **Abstract**

The invention discloses a bandwidth expanded DSLAM and a data transmission method thereof. In the invention, a video bus that is specialized for multicasting video data transmission is added in the DSLAM; the video bus with original data bus together perform data transmission for the DSLAM, so the bandwidth is expanded and the bandwidth problem of the multicasting video data transmission in the present DSLAM has been solved. It is implemented on the backboard and with lower cost.

## Description

### Field of the Technology

The invention generally relates to access technology of telecommunication field, especially to a Digital Subscriber Line Access Multiplexer (DSLAM) that implements bandwidth expansion for multicasting video service and transmission method thereof.

### Background of the Invention

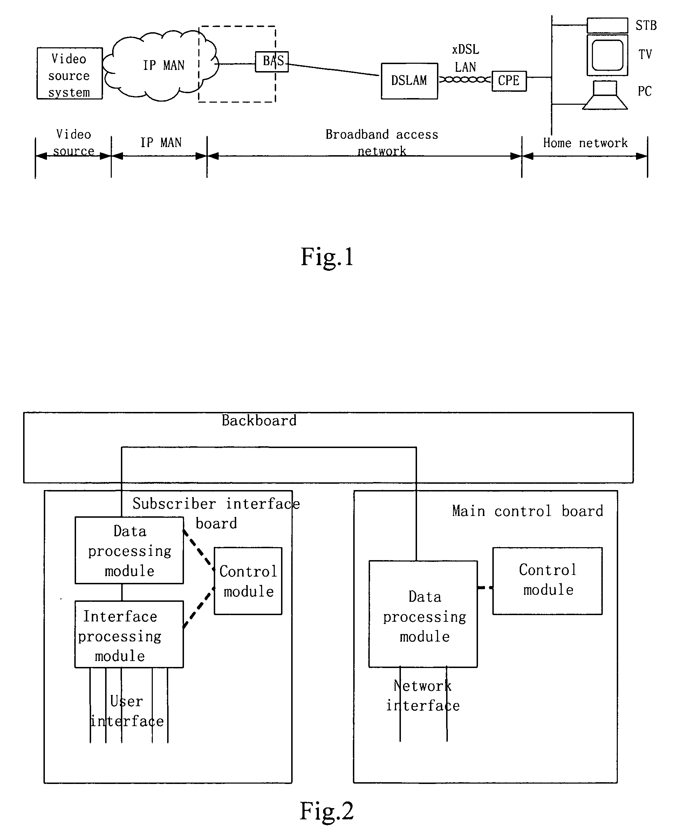

Along with the development of video programs, multicasting video service becomes one of the necessary services on a broadband network. Usually, the network, shown in Figure 1, implementing multicasting video service includes a video source system, an IP metropolitan area network (MAN), a broadband access network and a home network. Wherein the video source system performs subscribers' management, Conditional Access/Digital Register Management (CA/DRM) and encodes video programs based on the MPEG-2 standard to form video service stream. The video service stream is encapsulated in a datagram according to User Datagram Protocol/Internet Protocol (UDP/IP) and then sent to the IP MAN. Through the IP multicasting, the IP MAN sends the video service stream to the DSLAM in the broadband access network. The DSLAM copies the video service stream among subscriber interfaces so that the subscribers can obtain their appropriate programs.

Usually a DSLAM device includes three parts: main control boards, subscriber interface boards and a backboard, which is shown in Figure 2. The main control board includes a control module and a data processing module, which provides control functions, stream delivery and convergence functions, and uplink network interface etc. The subscriber interface board provides access interfaces, and different subscriber interface boards provide different access modes, which may be Asymmetric Digital Subscriber Line (ADSL), Very-High-Data-Rate Digital Subscriber Line (VDSL), Ethernet or G.SHDSL (the multi-rate version of HDSL-2) etc. Usually a DSLAM device can provide multiple subscriber interface boards and each subscriber board provides a certain amount of access interfaces, for example, an ADSL subscriber interface board provides 32, 48 or even 64 channel interfaces. The subscriber interface board includes a control module and a data processing module. If controls of subscriber interface board are concentrated on the main control board, the subscriber interface board does not have the control module. The backboard provides connection between the main control boards and the subscriber interface boards, which are inserted in the slots of the backboard. It also provides a data bus for data transmission.

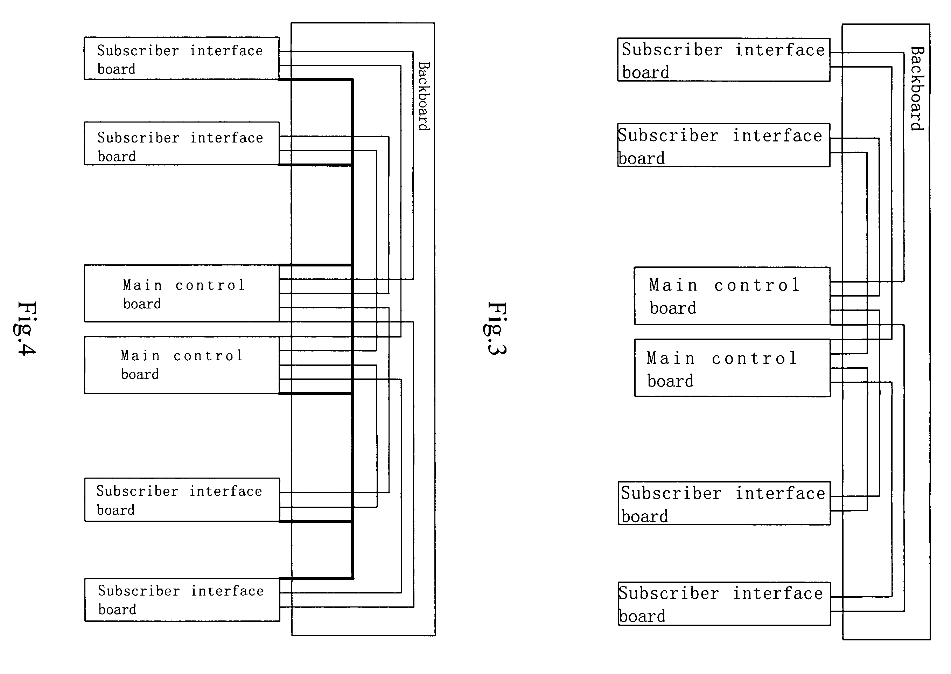

Figure 3 shows that two main control boards where one is principal and another is backup connect each subscriber interface board through the data bus provided by the backboard, respectively. During the time of a multicasting service is performed, the main control board copies the video service stream and then sends it to the data bus; the subscriber interface board forwards the received video service stream and then sends it to the appropriate subscriber. There is only one set of data bus on the backboard, so both video service stream copied by the main control board and the data service are sent to the data bus and then received by the subscriber interface board. However, along with the video programs getting more, bandwidth requirement is getting wider inside a DSLAM device. The bandwidth of each multicasting channel is 1Mbps to 4Mbps, and it is about 7Mbps for the High Definition Television. In general, a network may provide more than 200 video channels for various entertainment programs. Taking 200 programs as an example, suppose that each channel needs 4Mbit/s, and the bandwidth is about 800Mbit/s to one Gigabit/s. This means that the DSLAM should have 800 Mbps to one Gigabit/s bandwidth to satisfy the video service needs.

Usually, in a DSLAM device, a star connection of FE bus of which bandwidth is 100Mbit/s is applied between the main control board and the subscriber interface board. Such a bandwidth doesn't meet the requirements for video multicasting at all. For example, in terms of 64 ADSL interfaces provided in the subscriber interface board and the each subscriber may watch two multicasting video programs, if the 64 ADSL interfaces carry different video programs, the data bus should support 128 video programs. If every video program needs 4 Mbps for service stream transmission, the bandwidth of the data bus needs to support 512Mbit/s at least. Therefore, the more video programs may be watched by the subscriber, the more bandwidth is needed by the data bus between the main control board and the subscriber interface board. The prior DSLAM device is unable to support video services.

### Summary of the Invention

Objective of the present invention is to provide a bandwidth expanded DSLAM to support more multicasting video channels and a transmission method therefore.

A bandwidth expanded Digital Subscriber Line Access Multiplexer (DSLAM) for multicasting video service includes main control boards, subscriber interface boards and a data bus which is connected between the main control boards and each of the subscriber interface boards, wherein the DSLAM further comprises a video bus which is connected between the main control boards and each of the subscriber interface boards for transmitting video service stream.

Wherein the DSLAM further comprises a multicasting distributor module; the main control board comprises a data processing module and a control module connected with the data processing module; wherein the data processing module outputs the video service stream to an input of the multicasting distributor module, and an output of the multicasting distributor module is connected to the video bus.

Wherein the video bus is a point-to-point star bus where the output of the multicasting distributor module is respectively connected to each data processing module in the subscriber interface board; the multicasting distributor module is used for duplicating the inputted video service stream and then outputting.

Wherein the video bus is a shared bus where the output of the multicasting distributor module is connected to each data processing module in the subscriber interface board in parallel; the multicasting distributor module is used for directly driving the inputted video service stream to output.

The video bus comprises one set of bus or multiple sets of buses bearing different video channels of the video service stream.

The video bus is a Gigabit Ethernet (GE) or a Cell bus.

The video bus is a unidirectional bus transmitting the video service stream from the main control board to the subscriber interface board.

A transmission method for bandwidth expanded DSLAM comprises,
connecting main control boards and each of subscriber interface boards in the DSLAM with a video bus, and
detecting whether a service from a network interface is a video service stream by the main control board; if it is, transmitting to each subscriber interface board through the video bus in the DSLAM, otherwise transmitting it though a data bus.

Wherein the step of transmitting to each subscriber interface board through an added video bus in the DSLAM comprises,
transmitting the video service stream to a multicasting distributor module by a data processing module in the main control board, and
transparently forwarding to the video bus which is shared by multicasting distributor module, and broadcasting to each data processing module of the subscriber interface board through the video bus.

Wherein the step of transmitting to each subscriber interface board through an added video bus in the DSLAM comprises,
transmitting the video service stream to a multicasting distributor module by a data processing module in the main control board;
duplicating the video service stream same copies with the number of connected subscriber interface boards in terms of broadcast mode, or duplicating it according to multicasting allocation in terms of multicast mode by the multicasting distributor module, and
outputting the copied video service stream to each data processing module in the subscriber interface board through the video bus which is a point-to-point star connection.

The transmission method further comprises, duplicating the received video service stream from the video bus among multicasting subscriber interfaces by the data processing module in the subscriber interface board.

The transmission method further comprises, detecting whether the received service stream from the video bus is a video service stream by the data processing module in the subscriber interface board; if it is, duplicating among multicasting subscriber interfaces, and otherwise discarding it.

The transmission method further comprises, transmitting all data from the multicast subscriber interface to the main control board through the data bus by the subscriber interface board.

From the above technical scheme of the invention, it is seen that the bandwidth for the video service stream transmission in the present DSLAM has been solved since the video bus that is specialized for video service stream transmission is added between main control boards and subscriber interface boards. It takes lower costs to expand the bandwidth of DSLAM so that the requirement of bandwidths for video multicasting is satisfied.

The present invention also shows that: when the video bus is star connection, its bandwidth can be 1.25 Gigabit/s that may support more than 300 video channels; furthermore, the multicasting distributor module can be a Repeater or a MUX which is cheaper than the complete GE exchange chip. When the video bus is shared, its bandwidth can be more than 1.2 Gigabit/s that may support more than 240 video channels.

### Brief Description of the Drawings

Figure 1 shows a diagram of a multicasting video network in prior art.
Figure 2 shows a structure diagram of the DSLAM in prior art.
Figure 3 shows a connection diagram between the main control board and the subscriber interface board in prior art.
Figure 4 shows the DSLAM structure diagram of the invention.
Figure 5 shows one connection diagram between the main control board and the subscriber interface board.
Figure 6 shows another connection diagram between the main control board and the subscriber interface board.

### Embodiments of the Invention

The invention will be described in more detail with reference to the drawings.

In the invention, a new video bus is set up on the DSLAM backboard, which is specialized for the video service stream transmission, so that the video service stream is separated from the conventional data stream and the bandwidth of the whole bus in a DSLAM is expanded.

Figure 4 shows a diagram of a bandwidth expanded DSLAM. In Figure 4, the main control boards and the subscriber interface boards are inserted in the slots on the backboard, and they are mutually connected through the video bus and the data bus. The video bus marked with thick real lines is added by the invention and only used for transmission of the multicasting video service stream; they can be a GE bus or a Cell bus, etc. The data bus that is original and marked with thin real lines is used for transmission of data service stream except the video service stream; they can be FE bus or GE bus etc. Said video bus is a unidirectional bus only from the main control boards to the subscriber interface boards; it can be a star connection or a broadcast bus with a shared connection. In this invention, the video bus added newly performs bandwidth expansion in a DSLAM for multicasting video service stream easier and cheaper.

The video bus newly added may include one set of bus or multiple sets of buses. When there are multiple sets of buses, the main control board determines which bus is idle or which bus is appropriate to transmit the current video service stream. Therefore, an appropriate allocation should be added to the data processing module in the main control board.

### Embodiment 1:

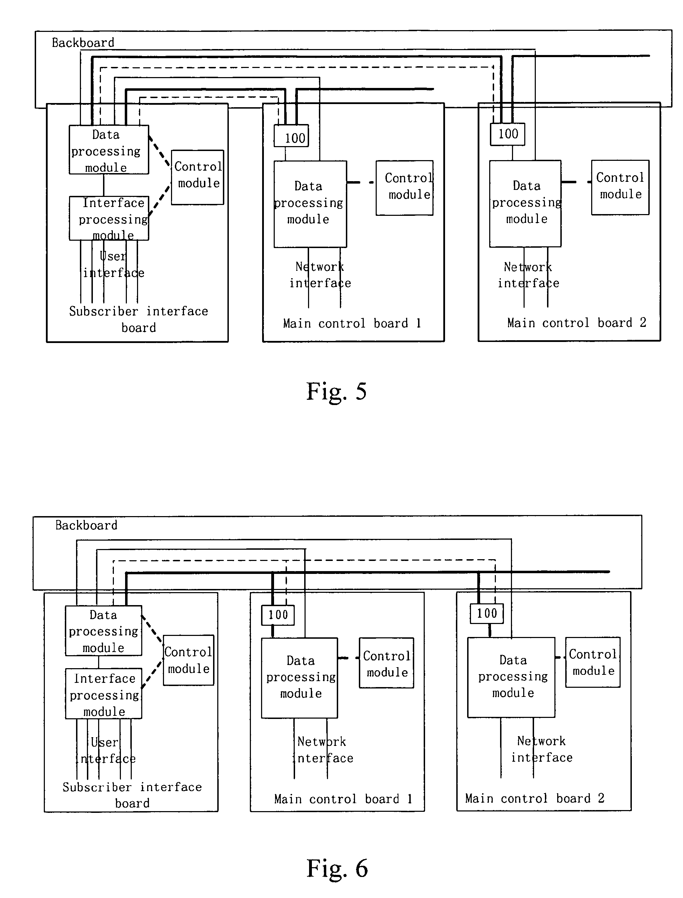

Figure 5 shows one connection diagram between the main control board and the subscriber interface board with the video star bus. At the output of original data processing module of the main control board, a multicasting distributor module 100 i.e. a bus interface module is added, and its each output is respectively connected with every subscriber interface board via the star bus. The multicasting distributor module 100 distributes single video service stream to the video bus and then to the each subscriber interface board. In term of the star video bus, the multicasting distributor module is a one-in-many-out module that copies one input to many outputs. The number of the output is equal with that of the connected subscriber interface boards. The video star bus may be a Low Voltage Differential Signal (LVDS) bus or a GE bus; correspondingly, the multicasting distributor module may be a LVDS Repeater or a GE Multiplex (Mux). In this invention, it is also necessary to have a video bus interface in the data processing module of the subscriber interface board to receive the downlink video service stream, which is then copied and send to the multicast subscriber interface with data service stream together.

### Based on the video star bus, service transmission is performed as follows:

The data processing module in the main control board receives the service stream from network interface and detects whether it is a video service stream; if it is, output to the multicasting distributor module; otherwise, output to the data bus which sends to the subscriber interface board.

The multicasting distributor module duplicates the received video service stream same copies with the number of connected subscriber interface boards in broadcast mode, or, does that according to the multicast allocation in multicast mode, and then sends to the data processing module in the subscriber interface boards through the video bus.

The data processing module in the subscriber interface boards detects whether the service stream from the video bus is a video service stream; if it is, duplicate same copies with the number of the multicast subscriber interfaces, and then distribute to the multicast subscriber interfaces companying with the data service stream from data bus in multicast mode; otherwise, discard it.

If there are multiple sets of video star bus (the thin broken line shown in Figure 5) in the DSLAM, the different video channels of the service stream are distributed to the different sets of video star buses through logic control of the multicasting distributor module. For example, the multicasting distributor module distributes video service stream with a first source multicasting address to a first video star bus and that with a second source multicasting address to a second video star bus.

### Embodiment 2:

Figure 6 shows another connection diagram between the main control board and the subscriber interface board with the video shared bus. A multicasting distributor module 100 is added at the output of the original data processing module of the main control board, and its output and each subscriber interface board are connected in parallel through the video shared bus. Here the multicasting distributor module 100 is used to drive the single video service stream and transparently forward to the video shared bus, and then to every subscriber interface board in broadcast mode since the video bus is shared now. Each subscriber interface board determines which multicasting program it will have according to the source multicasting address and then copies them, and outputs to the associated multicast subscriber interfaces. In this case, the video shared bus can be a Cell Bus (a data bus based on cell with fixed length), a simplified Cell Bus with driving function or a Utopia Bus (an ATM interface bus) etc; the multicasting distributor module is a one-in-one-out bus interface module, and it can be a Cell Bus interface chip. In the data processing module of a subscriber interface board, an interface for video bus needs to provide in order to receive downlink video service stream, which is then sent to the multicast subscriber interface companying with data service stream.

### Based on the video shared bus, service transmission is performed as follows:

The data processing module in the main control board receives the service stream from network interface and detects whether it is a video service stream; if it is, output to the multicasting distributor module; otherwise, output to the data bus which sends to the subscriber interface board.

The multicasting distributor module directly transmits the video service stream to the data processing module in the subscriber interface boards through the video shared bus in broadcast mode.

The data processing module in the subscriber interface boards detects whether the service stream from the video bus is a video service stream; if it is, duplicate same copies with the number of the multicast subscriber interfaces, and then distribute to the subscriber terminal, such as a STB, TV, PC and like, companying with the data service stream from data bus in multicast mode; otherwise, discard it.

Difference of the two bus schemes mentioned above is that: for the video star bus, each data processing module in the subscriber interface board needs two video bus interfaces to connect with two control boards that include a main control board and a backup control board, respectively, and the multiple copies of video service stream are transmitted on the backboard in order to send to different subscriber interface boards, accordingly; for the shared bus, each data processing module in the subscriber interface board needs only one video bus interface to connect with the shared bus, and only one copy of the video service stream is transmitted on the backboard, thus each subscriber interface board is able to receive the associated video services.

If there are multiple sets of video sheared bus (the thin broken line shown in Figure 6) in the DSLAM, the different video channels of the service stream are distributed to the different sets of video sheared bus through logic control of the multicasting distributor module. For example, the multicasting distributor module distributes video service stream with a first source multicasting address to a first video shared bus and that with a second source multicasting address to a second video shared bus.

In addition, all the data received from a subscriber side by the subscriber board is sent to the main control board through the original data bus.

In this invention, bandwidth of the added video bus, such as a cell bus, GE bus and the like, depends on the required multicasting bandwidth of the DSLAM, so it is convenient to expand the multicast bandwidth in order to meet the different requirements in network.

All mentioned above is only the embodiments of the invention, and it is not intended to limit the protection scope of the invention. Any professional in the art can make changes and replacements easily, but all these are covered in the protection scope of the invention. The protection scope should encompass what has been mentioned in the Claims.

## Claims

1. A bandwidth expanded Digital Subscriber Line Access Multiplexer (DSLAM) for multicasting video service comprises a main control board, subscriber interface boards and a data bus which is connected between the main control board and each of the subscriber interface boards, wherein the DSLAM further comprises a video bus which is connected between the main control board and each of the subscriber interface boards for transmitting a video service stream.

2. The bandwidth expanded DSLAM according to Claim 1, wherein the DSLAM further comprises a multicasting distributor module; the main control board comprises a data processing module and a control module connected with the data processing module; the data processing module outputs the video service stream to an input of the multicasting distributor module, and an output of the multicasting distributor module is connected to the video bus.

3. The bandwidth expanded DSLAM according to Claims 1 or 2, wherein the video bus is a point-to-point star bus where the output of the multicasting distributor module is respectively connected to a data processing module in each subscriber interface board; the multicasting distributor module is used for duplicating the inputted video service stream and outputting to each subscriber interface board, respectively.

4. The bandwidth expanded DSLAM according to Claims 1 or 2, wherein the video bus is a shared bus where the output of the multicasting distributor module is connected to the data processing module in each subscriber interface board in parallel; the multicasting distributor module is used for directly driving the inputted video service stream to each subscriber interface board.

5. The bandwidth expanded DSLAM according to Claims 1 or 2, wherein the video bus comprises one set of bus or multiple sets of buses carrying different video channels of the video service stream.

6. The bandwidth expanded DSLAM according to Claims 1 or 2, wherein the video bus is a Gigabit Ethernet (GE) bus or a Cell bus.

7. The bandwidth expanded DSLAM according to Claims 1 or 2, wherein the video bus is a unidirectional bus transmitting the video service stream from the main control board to the subscriber interface board.

8. A transmission method for bandwidth expanded DSLAM comprising, connecting a main control board and each of subscriber interface boards in the DSLAM with a video bus, and
detecting whether a service from a network interface is a video service stream by the main control board; if yes, transmitting to each subscriber interface board through the video bus in the DSLAM, and otherwise transmitting it through a data bus.

9. The transmission method according to Claim 8, wherein the step of transmitting to each subscriber interface board through the video bus in the DSLAM comprises,
transmitting the video service stream to an added multicasting distributor module by a data processing module in the main control board, and
the multicasting distributor module transparently forwarding to the video bus which is shared , and broadcasting to a data processing module of each subscriber interface board through the video bus.

10. The transmission method according to Claim 8, wherein the step of transmitting to each subscriber interface board through the video bus in the DSLAM comprises,
transmitting the video service stream to the multicasting distributor module by the data processing module in the main control board;
duplicating the video service stream same copies with the number of connected subscriber interface boards in broadcast mode, or duplicating it according to multicasting allocation in multicast mode by the multicasting distributor module, and
outputting the copied video service stream to the data processing module in each subscriber interface board through the video bus which is a point-to-point star connection.

11. The transmission method according to Claims 8, 9 or 10, further comprising, duplicating the received video service stream from the video bus by the data processing module in the subscriber interface board, and outputting to a multicasting subscriber interface.

12. The transmission method according to Claims 8, 9 or 10, further comprising, detecting whether the received service stream from the video bus is a video service stream by the data processing module in the subscriber interface board; if it is, duplicating the received service stream and outputting to the multicasting subscriber interface, otherwise discarding it.

13. The transmission method according to Claims 8, 9 or 10, further comprising, transmitting all data from the multicast subscriber interface to the main control board through the data bus by the subscriber interface board.
